# EUROPEAN PATENT APPLICATION

(11) **EP 3 116 052 A1**
(43) Date of publication of application: **11.01.2017**
(21) Application number: 15175881.0
(22) Date of filing: 08.07.2015
(51) Int. Cl.: H01M 4/60, H01M 12/08, C07D 211/94, H01M 4/90

(54) **RECHARGEABLE METAL-OXYGEN CELLS**

(71) Applicant: BASF SE, 67056 Ludwigshafen am Rhein (DE); Justus-Liebig-Universität Gießen, 35390 Gießen (DE)
(72) Inventor: BERGNER, Benjamin, 73614 Schorndorf (DE); JANEK, Juergen, 35392 Giessen (DE); BUSCHE, Martin, 35625 Hüttenberg (DE)
(74) Representative: BASF IP Association

(57) **Abstract**

The present invention relates to a rechargeable electrochemical cell comprising
(a) at least one anode (a),
(b) at least one gas diffusion electrode (b) comprising at least one porous support,
(c) at least one non-porous metal-ion conducting separator assembly (c) placed between anode (a) and gas diffusion electrode (b), and
(d) at least one composition (d) being in contact with the gas diffusion electrode (b), wherein the composition (d) comprises
(d1) at least one aprotic organic solvent (d1),
(d2) at least one metal salt (d2), and
(d3) at least one redox active compound (d3), wherein the concentration of the redox active compound (d3) in the composition (d) is in the range from 100 to 5000 mmol/l,

wherein any contact of composition (d) with anode (a) is prevented by hermetically sealing these components from each other.

The present invention further relates to a specific composition (d) comprising
(d1) at least one aprotic organic solvent (d1),
(d2) at least one metal salt (d2), and
(d3) at least one redox active compound of general formula (I),

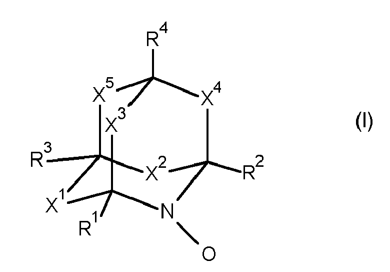

wherein
R¹,
R² are independently from each other selected from H and an organic radical having from 1 to 40 carbon atoms,
X¹
is CR⁵R^{5a} or a nitroxyl radical group N-O·,
X2
is CR⁶R^{6a} or a nitroxyl radical group N-O·,
X3
is CR⁷R^{7a} or a nitroxyl radical group N-O·,
X⁴
is CR⁸R^{8a} or a nitroxyl radical group N-O·,
X⁵
is CR⁹R^{9a} or a nitroxyl radical group N-O·,
R³,
R⁴, R⁵, R^{5a}, R⁶, R^{6a} R⁷, R^{7a}, R⁸, R^{8a}, R⁹, R^{9a} are independently from each other selected from H and an organic radical having from 1 to 40 carbon atoms,

or two adjacent radicals of the group of radicals consisting of R¹, R², R³, R⁴, R⁵, R^{5a}, R⁶, R^{6a} R⁷, R^{7a}, R⁸, R^{8a}, R⁹ and R^{9a} together with the atoms connecting them form a monocyclic or polycyclic, substituted or unsubstituted, aliphatic or aromatic ring system which has from 4 to 40 carbon atoms and can also comprise heteroatoms selected from the group consisting of the elements Si, Ge, N, P, O, S, Se and Te,
and relates to rechargeable electrochemical cells comprising said specific composition (d).

## Description

The present invention relates to a rechargeable electrochemical cell comprising
(a) at least one anode (a),
(b) at least one gas diffusion electrode (b) comprising at least one porous support,
(c) at least one non-porous metal-ion conducting separator assembly (c) placed between anode (a) and gas diffusion electrode (b), and
(d) at least one composition (d) being in contact with the gas diffusion electrode (b), wherein the composition (d) comprises
   (d1) at least one aprotic organic solvent (d1),
   (d2) at least one metal salt (d2), and
   (d3) at least one redox active compound (d3), wherein the concentration of the redox active compound (d3) in the composition (d) is in the range from 100 to 5000 mmol/l,
wherein any contact of composition (d) with anode (a) is prevented by hermetically sealing these components from each other.

The present invention further relates to a specific composition (d) comprising
(d1) at least one aprotic organic solvent (d1),
(d2) at least one metal salt (d2), and
(d3) at least one redox active compound of general formula (I), 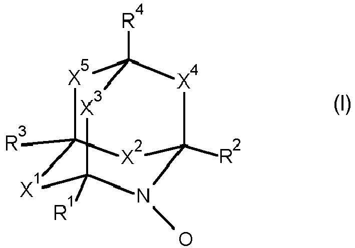 wherein
   - R¹, R²: are independently from each other selected from H and an organic radical having from 1 to 40 carbon atoms,
   - X¹: is CR⁵R^{5a} or a nitroxyl radical group N-O-,
   - X2: is CR⁶R^{6a} or a nitroxyl radical group N-O-,
   - X3: is CR⁷R^{7a} or a nitroxyl radical group N-O-,
   - X⁴: is CR⁸R^{8a} or a nitroxyl radical group N-O-,
   - X⁵: is CR⁹R^{9a} or a nitroxyl radical group N-O-,
   - R³,: R⁴, R⁵, R^{5a}, R⁶, R^{6a} R⁷, R^{7a}, R⁸, R^{8a}, R⁹, R^{9a} are independently from each other selected from H and an organic radical having from 1 to 40 carbon atoms,
   or two adjacent radicals of the group of radicals consisting of R¹, R², R³, R⁴, R⁵, R^{5a}, R⁶, R^{6a} R⁷, R^{7a}, R⁸, R^{8a}, R⁹ and R^{9a} together with the atoms connecting them form a monocyclic or polycyclic, substituted or unsubstituted, aliphatic or aromatic ring system which has from 4 to 40 carbon atoms and can also comprise heteroatoms selected from the group consisting of the elements Si, Ge, N, P, O, S, Se and Te,
and relates to rechargeable electrochemical cells comprising said specific composition (d).

Secondary batteries, accumulators or rechargeable batteries are just some embodiments by which electrical energy can be stored after generation and used when required. Due to the significantly better power density, there has been a move in recent times away from the water-based secondary batteries to development of batteries in which the charge transport in the electrical cell is accomplished by lithium ions.

However, the energy density of conventional lithium ion accumulators which have a carbon anode and a cathode based on metal oxides is limited. New horizons with regard to energy density have been opened up by lithium-sulfur cells and by alkali metal-oxygen cells, in particular lithium-air cells. In one typical embodiment, an alkali metal like lithium or sodium is oxidized with atmospheric oxygen in a non-aqueous electrolyte to form an oxide or a peroxide, i.e., to form Li₂O or Li₂O₂. The energy released is utilized electrochemically. Batteries of this kind can be recharged by reduction of the alkali metal ions formed in the discharge. For this purpose, the use of gas diffusion electrodes (GDEs) as the cathode is known. Gas diffusion electrodes are porous and have bifunctional actions. Alkali-metal-air batteries must enable the reduction of the atmospheric oxygen to oxide or peroxide ions in the course of discharging, and the oxidation of the oxide or peroxide ions to oxygen in the course of charging. For this purpose, for example, the construction of gas diffusion electrodes on a carrier material composed of finely divided carbon is known, said carrier material comprising one or more catalysts for catalysis of the oxygen reduction or of the oxygen evolution.

The use of redox active compounds soluble in the electrolyte of lithium-oxygen batteries as catalyst is known.

WO 2011/133982 describes a rechargeable metal-air battery comprising a liquid that at least partially fills the pores of the positive electrode and wherein the liquid comprises a soluble oxygen evolving catalyst (OEC).

US2009/0239113 describes a lithium air battery comprising a compound having a stable radical skeleton wherein the compound also serves as a redox catalyst for oxygen.

Nature Chem. 5, 489-494 (2013) describes the use of tetrathiafulvalene (TTF) as redox mediator in lithium-oxygen batteries.

Lithium iodide is described in Angew. Chem. Int. Ed. 53, 4007-4012 (2014), in Electrochem. Soc. 161, A1306-A1314 (2014) and in J. Mater. Chem. A, 2015, 3, 8855-8864 as redox mediator in lithium-oxygen batteries.

J. Am. Chem. Soc. 2014, 136, 8941-8946 describes iron phthalocyanine as redox active soluble compound in the electrolyte of lithium-oxygen batteries.

In J. Am. Chem. Soc. 2014, 136, 15054-15064 the use of 2,2,6,6-tetramethylpiperidinyloxyl as redox mediator in lithium-oxygen batteries is described.

WO2013/077863 describes electrochemical cells comprising a charging redox couple within the positive electrode wherein a protective layer between the negative electrode and the positive electrolyte is used for blocking a transport of the oxidized redox specie to the negative electrode.

Chem. Commun. 2015 (DOI 10.1039/c5cc0161a) describes a redox flow lithium-air cell comprising a charging redox couple in small concentrations wherein a protective layer between the negative electrode and the positive electrolyte is used for blocking a transport of the oxidized redox specie to the negative electrode.

Redox active compounds have also been solely used as active cathode materials.

Angew. Chem. Int. Ed. 2014, 53, 11036-11040 describes a reversible battery based on the ferrocenium (Fc+) ferrocene (Fc) redox couple and a lithium anode.

Adv. Mater. 2014, 26, 7649-7653 describes a reversible redox flow battery based on the TEM-PO⁺/TEMPO redox couple and a lithium anode.

US 2005/0170247 describes a rechargeable battery which is based on radical compounds which are reduced to the corresponding negatively charged compounds during discharging of the electrochemical cell.

J. Am. Chem. Soc. 2006, 128, 8412-8413 describes the use of several derivatives of 2-Azaadamantane *N*-oxyl (AZADO) as organocatalysts for the oxidation of alcohols.

It was therefore an object of the invention to improve metal-oxygen cells with respect to coulombic efficiency and energy density by increasing the amount of storable energy, reduction of charging overvoltage and reduction of self-discharge and to provide appropriate concepts and components for fulfilling these demands.

This object is achieved by a rechargeable electrochemical cell comprising
(a) at least one anode (a),
(b) at least one gas diffusion electrode (b) comprising at least one porous support,
(c) at least one non-porous metal-ion conducting separator assembly (c) placed between anode (a) and gas diffusion electrode (b), and
(d) at least one composition (d) being in contact with the gas diffusion electrode (b), wherein the composition (d) comprises
   (d1) at least one aprotic organic solvent (d1),
   (d2) at least one metal salt (d2), and
   (d3) at least one redox active compound (d3), wherein the concentration of the redox active compound (d3) in the composition (d) is in the range from 100 to 5000 mmol/l,
wherein any contact of composition (d) with anode (a) is prevented by hermetically sealing these components from each other.

In the context with the present invention, the electrode where during discharging a net negative charge occurs is called the anode.

An inventive rechargeable electrochemical cell comprises at least one anode (a). Anode (a) can be selected from anodes being based on various active materials. Suitable active materials are alkali metals like metallic lithium, alkaline earth metals like magnesium, Al, Si or Zn, carbon-containing materials such as graphite, graphene, charcoal, expanded graphite, in particular graphite, furthermore lithium titanate (Li₄Ti₅O₁₂), anodes comprising In, TI, Sb, Sn or Si, in particular Sn or Si, for example tin oxide (SnO₂) or nanocrystalline silicon, and anodes comprising metallic lithium.

The alkali metal of anode (b) can be present in the form of a pure alkali metal phase, in form of an alloy together with other metals or metalloids, in form of an intercalation compound or in form of an ionic compound comprising at least one alkali metal and at least one transition metal.

Preferably anode (a) comprises a metal selected from the group consisting of alkali metals, alkaline earth metals, Al, Si and Zn, preferably selected from the group consisting of Li, Na and Zn, in particular Li.

In one embodiment of the present invention the rechargeable electrochemical cell is characterized in that anode (a) comprises a metal selected from the group consisting of alkali metals, alkaline earth metals, Al, Si and Zn, preferably selected from the group consisting of Li, Na and Zn, in particular Li.

In one embodiment of the present invention the rechargeable electrochemical cell is a lithium-oxygen cell, for example a lithium-air cell.

Anode (a) can further comprise a current collector. Suitable current collectors are, e.g., metal wires, metal grids, metal gaze and preferably metal foils such as copper foils.

Anode (a) can further comprise a binder. Suitable binders can be selected from organic (co)polymers. Suitable organic (co)polymers may be halogenated or halogen-free. Examples are polyethylene oxide (PEO), cellulose, carboxymethyl cellulose, polyvinyl alcohol, polyethylene, polypropylene, polytetrafluoroethylene, polyacrylonitrile-methyl methacrylate, styrenebutadiene copolymers, tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers, ethylene-chlorofluoroethylene copolymers, ethylene-acrylic acid copolymers, optionally at least partially neutralized with alkali metal salt or ammonia, ethylene-methacrylic acid copolymers, optionally at least partially neutralized with alkali metal salt or ammonia, ethylene-(meth)acrylic ester copolymers, polysulfones, polyimides and polyisobutene.

Suitable binders are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

The average molecular weight M_{w} of binder may be selected within wide limits, suitable examples being 20,000 g/mol to 1,000,000 g/mol.

In one embodiment of the present invention, anode (a) can have a thickness in the range of from 15 to 200 µm, preferably from 30 to 100 µm, determined without the current collector.

In the context with the present invention, the electrode where during discharging a net positive charge occurs is called the cathode. The cathodes of the present inventive rechargeable electrochemical cells wherein molecular oxygen O₂ is used as oxidant during discharging, are gas diffusion electrodes. Gas diffusion electrodes, which are permeable to oxidizing gases, in particular to molecular oxygen O₂, are known.

The inventive rechargeable electrochemical cell further comprises, as well as anode (a), at least one gas diffusion electrode (b) comprising at least one porous support.

Inventive rechargeable electrochemical cells comprise at least one gas diffusion electrode comprising at least one porous support. In the context of the present invention, this gas diffusion electrode is also called electrode (b) or gas diffusion electrode (b) for short.

The porous support of the gas diffusion electrode is such a material or composition through which oxygen or air can diffuse even without application of elevated pressure, for example metal meshes and gas diffusion media composed of carbon, especially activated carbon, and carbon on metal mesh. The gas permeability can be determined, for example by the Gurley method in analogy to the measurement of the gas permeability of paper or paperboard or by the "through plane air permeability" according to DIN EN ISO 9273.

In one embodiment of the present invention, oxygen, air or atmospheric oxygen can flow essentially unhindered through the porous support of electrode (b).

Preferably the porous support of the gas diffusion electrode is a material or composition which conducts the electrical current. Preferably such a material or composition comprises at least one electrically conductive material.

In one embodiment of the present invention, the inventive rechargeable electrochemical cell is characterized in that the porous support of the gas diffusion electrode (b) comprises at least one electrically conductive material.

In a preferred embodiment of the present invention, the porous support of electrode (B) is chemically inert with respect to the reactions which proceed in an electrochemical cell in standard operation, i.e. in the course of charging and in the course of discharging.

In one embodiment of the present invention, the porous support of electrode (b) has an internal BET surface area in the range from 0.5 to 1500 m²/g, which is preferably referred to as the apparent BET surface area.

In one embodiment of the present invention, the porous support of electrode (b) is selected from metal meshes, for example nickel meshes or tantalum meshes. Metal meshes may be coarse or fine.

In another embodiment of the present invention, the porous support of electrode (b) is selected from electrically conductive fabrics, for example mats, felts or fibrous nonwoven webs of carbon fibers or carbon which comprise metal filaments, for example tantalum filaments, stainless steel filaments or nickel filaments.

In one embodiment of the present invention, the porous support of electrode (b) or the electrically conductive material is selected from the group consisting of activated carbon, aluminum-doped zinc oxide, antimony-doped tin oxide, fluorine-doped tin dioxide and porous carbides or nitrides, for example WC, Mo₂C, Mo₂N, TiN, ZrN or TaC.

In another embodiment of the present invention, the electrode (b) comprises carbon, in particular carbon in a polymorph comprising at least 60% sp²-hybridized carbon atoms, as described in WO 2011/148357, page 4, line 21 to page 5, line 25. Preferably this carbon is in the form of particles having a diameter in the range from 0.1 to 100 µm, preferably 2 to 20 µm. The particle diameter is understood to mean the mean diameter of the secondary particles, determined as the volume average.

In one embodiment of the present invention, the inventive rechargeable electrochemical cell is characterized in that the porous support of the gas diffusion electrode (b) comprises at least one carbonaceous electrically conductive material, like graphite, activated carbon, carbon black, carbon fibers, carbon nanotubes, graphene or mixtures of at least two of the aforementioned substances, in particular carbon fibers.

The gas diffusion electrode (b) can comprise at least one solid catalyst enabling the reduction of oxygen to oxide species like superoxide, peroxide or oxide ions in the course of discharging and at least a catalyst enabling the oxidation of the negatively charged oxide species to oxygen in the course of charging. It is possible to use the same solid catalyst for both reactions or to use different solid catalysts for both reactions.

Suitable solid catalysts are, in particular, mixed oxides, for example cobalt oxides, nickel oxides, iron oxides, chromium oxides, tungsten oxides, and also noble metals, in particular silver, or immobilized organic oxidation resp. reduction catalysts. In a preferred embodiment, a catalyst combination of a catalyst which catalyzes the reduction of oxygen and a bifunctional catalyst as described in WO 2007/065899 A1, page 7, line 14 to page 8, line 27, is used. A preferred catalyst which both catalyzes the oxygen oxidation and also reduction is La₂O₃. Preferred catalysts for the reduction of oxygen are MnO₂, KMnO₄, MnSO₄, SnO₂, Fe₂O₃, Co₃O₄, Co, CoO, Fe, Pt, Pd, Ag₂O, Ag, Au, spinels and perovskites. A particularly preferred discharging catalyst is silver (Ag), in particular as powder having a surface area of from 0.1 to 80 m²/g. A particularly preferred charging catalyst is Fe₂(WO₄)₃.

Molecular oxygen O₂ is reduced during discharging of the inventive rechargeable electrochemical cell at the gas diffusion electrode. The necessary molecular oxygen O₂ can be used in form of a gas with a high purity, for example in purity of higher than 99.9%, or diluted with one or more additional gases, preferably chemically inert gases. A preferred form of diluted oxygen is air.

In a particularly preferred embodiment of the present invention, the porous support of electrode (b) does not comprise a solid catalyst enabling the reduction of molecular oxygen.

In addition, cathode (b) may have further constituents customary per se, for example an output conductor which may be configured in the form of a metal wire, metal grid, metal mesh, expanded metal, or metal foil or metal sheet, wherein a preferred metal is stainless steel.

The inventive rechargeable electrochemical cell further comprises, as well as anode (a) and gas diffusion electrode (b), at least one non-porous metal-ion conducting separator assembly (c) placed between anode (a) and gas diffusion electrode (b). The separator assembly (c) is either in direct contact with the anode (a) or separated from the anode (a) by an additional layer of liquid electrolyte.

In the context with the present invention, the term non-porous separator assembly describes a separator assembly which is impervious with respect to organic or inorganic molecules, in particular those molecules present in composition (d) like aprotic organic solvent molecules or the molecules of a redox active compound. That means the non-porous metal-ion conducting separator assembly (c) allows only the passage of metal-ions, in particular of lithium-ions. Metal-ion conducting materials, in particular alkali-ion conducting materials are known by the person skilled in the art. Preferred examples of alkali-ion conducting materials are those which are selected from the group consisting of ion conducting polymers, polymer gels, polymer composites, ceramics, sintered ceramics, glass-ceramics and glasses.

In one embodiment of the present invention, the inventive rechargeable electrochemical cell is characterized in that the non-porous metal-ion conducting separator assembly (c) comprises an alkali-ion conducting material selected from the group consisting of ion conducting polymers, polymer gels, polymer composites, ceramics, sintered ceramics, glass-ceramics and glasses.

Examples of metal-ion conducting separator assemblies, in particular lithium-ion conducting separator assemblies are described for example in US 7,175.937, WO 2014/203100 or PCT/EP 2014/077410 which are incorporated herein in their entirety by reference.

The inventive rechargeable electrochemical cell further comprises, as well as anode (a), gas diffusion electrode (b) and non-porous metal-ion conducting separator assembly (c) placed between anode (a) and gas diffusion electrode (b), at least one composition (d) being in contact with the gas diffusion electrode (b), wherein the composition (d) comprises
(d1) at least one aprotic organic solvent (d1),
(d2) at least one metal salt (d2), and
(d3) at least one redox active compound (d3), wherein the concentration of the redox active compound (d3) in the composition (d) is in the range from 100 to 5000 mmol/l.

Possible aprotic organic solvents (d1) may be liquid or solid at room temperature and are preferably liquid at room temperature. Solvents (d1) are preferably selected from polymers, cyclic or noncyclic ethers, cyclic or noncyclic acetals, cyclic or noncyclic organic carbonates and ionic liquids.

In one embodiment of the present invention the inventive rechargeable electrochemical cell is characterized in that the aprotic organic solvent (d1) is selected from polymers, cyclic or noncyclic ethers, noncyclic or cyclic acetals, cyclic or noncyclic organic carbonates and ionic liquids.

Examples of suitable polymers are especially polyalkylene glycols, preferably poly-C₁-C₄-alkylene glycols and especially polyethylene glycols. Polyethylene glycols may comprise up to 20 mol% of one or more C₁-C₄-alkylene glycols in copolymerized form. Polyalkylene glycols are preferably doubly methyl- or ethyl-capped polyalkylene glycols.

The molecular weight M_{w} of suitable polyalkylene glycols and especially of suitable polyethylene glycols may be at least 400 g/mol.

The molecular weight M_{w} of suitable polyalkylene glycols and especially of suitable polyethylene glycols may be up to 5 000 000 g/mol, preferably up to 2 000 000 g/mol.

Examples of suitable noncyclic ethers are, for example, diisopropyl ether, di-n-butyl ether, 1,2-dimethoxyethane, diethylene glycol dimethyl ether (also referred to as diglyme), triethylene glycol dimethyl ether, tetraethylene glycol dimethyl ether, 1,2-diethoxyethane, preference being given to diethylene glycol dimethyl ether.

Examples of suitable cyclic ethers are tetrahydrofuran and 1,4-dioxane.

Examples of suitable noncyclic acetals are, for example, dimethoxymethane, diethoxymethane, 1,1-dimethoxyethane and 1,1-diethoxyethane.

Examples of suitable cyclic acetals are 1,3-dioxane and especially 1,3-dioxolane.

Examples of suitable noncyclic organic carbonates are dimethyl carbonate, ethyl methyl carbonate and diethyl carbonate.

Examples of suitable ionic liquids are known to the person skilled in the art. Several ionic liquids, which are liquid salts with a melting point below 100 °C, in particular below room temperature, are commercially available or can be prepared according to known protocols.

In one embodiment of the present invention the inventive rechargeable electrochemical cell is characterized in that the aprotic organic solvent (d1) is selected from a polyether of formula X 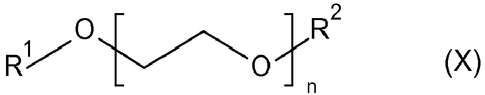 wherein
- R¹, R²: are identical or different, and are each methyl or ethyl, preferably methyl, and
- n: is 1, 2, 3 or 4, preferably 2 or 3, in particular 2.

Preference is given to using the solvent(s) in what is called the anhydrous state, i.e. with a water content in the range from 1 ppm to 0.1 % by weight, determinable, for example, by Karl Fischer titration.

The electrolyte composition (d) of the inventive rechargeable electrochemical cell further comprises, as well as the aprotic organic solvent (d1), at least one metal salt (d2). The metal salt (d2) serves as conductive salt. Possible metal salts (d2) like alkali metal salts, earth alkali metal salts or zinc salts, preferably alkali metal salts, in particular lithium salts, which are used as conductive salts, have to be soluble in the aprotic organic solvent (d1). Preferred metal salts (d2) are lithium salts, sodium salts or zinc salts, in particular lithium salts.

In one embodiment of the present invention the inventive rechargeable electrochemical cell is characterized in that the metal salt (d2) is a lithium salt.

Examples of suitable lithium salts are LiPF₆, LiBF₄, LiClO₄, LiAsF₆, LiCF₃SO₃, LiC(CₙF₂ₙ₊₁SO₂)₃, lithium imides such as LiN(CₙF₂ₙ₊₁SO₂)₂, where n is an integer in the range from 1 to 20, LiN(SO₂F)₂, Li₂SiF₆, LiSbF₆, LiAlCl₄, and salts of the general formula (CₙF₂ₙ₊₁SO₂)ₘXLi, where m is defined as follows:
m = 1 when X is selected from oxygen and sulfur,
m = 2 when X is selected from nitrogen and phosphorus, and
m = 3 when X is selected from carbon and silicon.

Preferred conductive salts are selected from LiC(CF₃SO₂)₃, LiN(CF₃SO₂)₂, LiCF₃SO₃, LiPF₆, LiBF₄, LiClO₄, particular preference being given to LiCF₃SO₃ and LiN(CF₃SO₂)₂.

The electrolyte composition (d) of the inventive rechargeable electrochemical cell further comprises, as well as the aprotic organic solvent (d1) and the alkali metal salt (d2), at least one redox active compound (d3), wherein the concentration of the redox active compound (d3) in the composition (d) is in the range from 100 to 5000 mmol/l, preferably in the range from 150 to 2000 mmol/l, in particular in the range from 200 to 1500 mmol/l. In the context of lithium-air batteries redox active species are typically referred to as redox mediators.

If more than one redox active compound (d3) is present in composition (d) the sum of the concentrations of all redox active compounds (d3) in composition (d) is in the range from 100 to 5000 mmol/l, preferably in the range from 150 to 2000 mmol/l, in particular in the range from 200 to 1500 mmol/l.

Dissolved redox active compounds seem to be essential for lithium-air batteries with an appropriate energy efficiency. State of the art lithium-air batteries with redox mediators are typically characterized by low concentrations of the redox active compound (≤ 50 mM) and a direct interface between the liquid electrolyte and the anode. In these cases, the beneficial effect of the redox active compound is limited to the reduction of the charging overvoltages. However, an increase of the storable energy could be provided by storing additional energy in the oxidized form of the redox active compound. A significant and long lasting storage of the additional energy could be solely achieved if a) the concentration of the redox active compound is high and b) a Li⁺ selective membrane is introduced between the anode and the liquid electrolyte. In the latter case the term catholyte is preferred to for the description of the electrolyte with the redox active compound.

The storable energy depends on the concentration of the redox active compound, the redox potential of the redox active compound and the number of electrons transferred in the oxidation reaction. Assuming a charge transfer of one electron between both redox states and a redox potential of 3.7 V vs. Li⁺/Li (which is for example provided be the redox couple TEM-PO⁺/TEMPO), a 200 mM solution of the redox active compound would provide an additional discharge capacity of ∼5 mAh per ml electrolyte resp. an additional energy of -71 J per ml electrolyte. A 1 M solution of the redox active compound would provide an additional discharge capacity of -27 mAh per ml electrolyte resp. an additional energy of -357 J per ml electrolyte. Depending on the chemical composition of the electrolyte, the gas diffusion electrode and in particular the mass ratio between electrolyte and gas diffusion electrode the redox active compound could account for additional 5 to 30% of the energy provided by the oxygen reduction reaction itself.

Some redox mediators, especially those of inorganic and organometallic nature, might significantly raise the density of the liquid electrolyte if they are dissolved in high concentrations (type A). However other redox systems, especially those of organic nature, lead to a small or negligible increase of the density of the liquid electrolyte (type B). Since the energy density of the final battery is influenced by the density of the liquid electrolyte, redox mediators of type B are preferred for applications in electric vehicles.

Suitable redox active compounds (d3) for rechargeable metal-oxygen cells are known by the person skill in the art. Example of suitable organic redox active compounds are for example derivatives of tetrathiafulvalene (TTF), polyalkoxybenzene, carbazole, quinone or cyclic nitroxides. Preference is given to redox active compounds which are selected from the group consisting of organic heterocyclic compounds comprising at least one nitrogen atom in a ring of said organic heterocyclic compounds wherein the nitrogen atom of the ring is part of a nitroxyl radical group N-O-.

In one embodiment of the present invention the inventive rechargeable electrochemical cell is characterized in that the redox active compound (d3) is selected from the group consisting of organic heterocyclic compounds comprising at least one nitrogen atom in a ring of said organic heterocyclic compounds wherein the nitrogen atom of the ring is part of a nitroxyl radical group N-O-.

Examples of suitable organic heterocyclic compounds are derivatives of tetrathiafulvalene (TTF), carbazole, quinone or cyclic nitroxides.

Preferably the redox active compound (d3) is a compound of general formula (I) 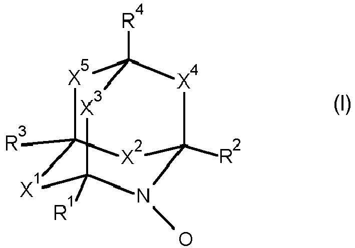 wherein
- R¹, R²: are independently from each other selected from H and an organic radical having from 1 to 40 carbon atoms,
- X¹: is CR⁵R^{5a} or a nitroxyl radical group N-O-,
- X2: is CR⁶R^{6a} or a nitroxyl radical group N-O-,
- X3: is CR⁷R^{7a} or a nitroxyl radical group N-O-,
- X⁴: is CR⁸R^{8a} or a nitroxyl radical group N-O-,
- X⁵: is CR⁹R^{9a} or a nitroxyl radical group N-O-,
- R³,: R⁴, R⁵, R^{5a}, R⁶, R^{6a} R⁷, R^{7a}, R⁸, R^{8a}, R⁹, R^{9a} are independently from each other selected from H and an organic radical having from 1 to 40 carbon atoms,
or two adjacent radicals of the group of radicals consisting of R¹, R², R³, R⁴, R⁵, R^{5a}, R⁶, R^{6a} R⁷, R^{7a}, R⁸, R^{8a}, R⁹ and R^{9a} together with the atoms connecting them form a monocyclic or polycyclic, substituted or unsubstituted, aliphatic or aromatic ring system which has from 4 to 40 carbon atoms and can also comprise heteroatoms selected from the group consisting of the elements Si, Ge, N, P, O, S, Se and Te.

The substituents of the redox active compounds of formula (I) according to the present invention are, unless restricted further, defined as follows:

The term "organic radical having from 1 to 40 carbon atoms" as used in the present text refers to, for example, C₁-C₄₀-alkyl radicals, C₁-C₁₀-fluoroalkyl radicals, C₁-C₁₂-alkoxy radicals, saturated C₃-C₂₀-heterocyclic radicals, C₆-C₄₀-aryl radicals, C₂-C₄₀-heteroaromatic radicals, C₆-C₁₀-fluoroaryl radicals, C₆-C₁₀-aryloxy radicals, silyl radicals having from 3 to 24 carbon atoms, C₂-C₂₀-alkenyl radicals, C₂-C₂₀-alkynyl radicals, C₇-C₄₀-arylalkyl radicals or C₈-C₄₀-arylalkenyl radicals. An organic radical is in each case derived from an organic compound. Thus, the organic compound methanol can in principle give rise to three different organic radicals having one carbon atom, namely methyl (H₃C-), methoxy (H₃C-O-) and hydroxymethyl (HOC(H₂)-).

The term "alkyl" as used in the present text encompasses linear or singly or multiply branched saturated hydrocarbons which can also be cyclic. Preference is given to a C₁-C₁₈-alkyl radical such as methyl, ethyl, n-propyl, n-butyl, n-pentyl, n-hexyl, n-heptyl, n-octyl, n-nonyl, n-decyl, cyclopentyl, cyclohexyl, isopropyl, isobutyl, isopentyl, isohexyl, sec-butyl or tert-butyl.

The term "alkenyl" as used in the present text encompasses linear or singly or multiply branched hydrocarbons having one or more C-C double bonds which can be cumulated or alternating.

The term "saturated heterocyclic radical" as used in the present text refers to, for example, monocyclic or polycyclic, substituted or unsubstituted aliphatic or aromatic hydrocarbon radicals in which one or more carbon atoms, CH groups and/or CH₂ groups have been replaced by heteroa- toms which are preferably selected from the group consisting of the elements O, S, N and P. Preferred examples of substituted or unsubstituted saturated heterocyclic radicals are pyrrolidinyl, imidazolidinyl, pyrazolidinyl, piperidyl, piperazinyl, morpholinyl, tetrahydrofuranyl, tetrahydro- pyranyl, tetrahydrothiophenyl and the like, and also methyl-, ethyl-, propyl-, isopropyl- and tert- butyl-substituted derivatives thereof.

The term "aryl" as used in the present text refers to, for example, aromatic and optionally fused polyaromatic hydrocarbon radicals which may be monosubstituted or polysubstituted by linear or branched C₁-C₁₈-alkyl, C₁-C₁₈-alkoxy, C₂-C₁₀-alkenyl or halogen, in particular fluorine. Preferred examples of substituted and unsubstituted aryl radicals are, in particular, phenyl, pentafluorophenyl, 4-methylphenyl, 4-ethylphenyl, 4-n-propylphenyl, 4-isopropylphenyl, 4-terf-butylphenyl, 4-methoxyphenyl, 1-naphthyl, 9-anthryl, 9-phenanthryl, 3,5-dimethylphenyl, 3,5-di-ferf-butylphenyl or 4-trifluoromethylphenyl.

The term "heteroaromatic radical" as used in the present text refers to, for example, aromatic hydrocarbon radicals in which one or more carbon atoms have been replaced by nitrogen, phosphorus, oxygen or sulfur atoms or combinations thereof. These may, like the aryl radicals, optionally be monosubstituted or polysubstituted by linear or branched C₁-C₁₈-alkyl, C₂-C₁₀-alkenyl or halogen, in particular fluorine. Preferred examples are furyl, thienyl, pyrrolyl, pyridyl, pyrazolyl, imidazolyl, oxazolyl, thiazolyl, pyrimidinyl, pyrazinyl and the like, and also methyl-, ethyl-, propyl-, isopropyl- and tert-butyl-substituted derivatives thereof.

The term "arylalkyl" as used in the present text refers to, for example, aryl-comprising substituents whose aryl radical is linked via an alkyl chain to the remainder of the molecule. Preferred examples are benzyl, substituted benzyl, phenethyl, substituted phenethyl and the like.

The terms fluoroalkyl and fluoroaryl mean that at least one hydrogen atom, preferably more than one and at most all hydrogen atoms, of the corresponding radical have been replaced by fluorine atoms. Examples of preferred fluorine-comprising radicals are trifluoromethyl, 2,2,2-trifluoroethyl, pentafluorophenyl, 4-trifluoromethylphenyl, 4-perfluoro-tert-butylphenyl and the like.

In one embodiment of the present invention the inventive rechargeable electrochemical cell is characterized in that the redox active compound (d3) is a compound of general formula (I) 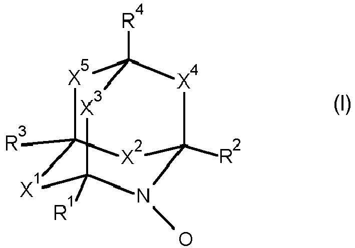 wherein
- R¹, R²: are independently from each other selected from H and an organic radical having from 1 to 40 carbon atoms,
- X¹: is CR⁵R^{5a} or a nitroxyl radical group N-O-,
- X2: is CR⁶R^{6a} or a nitroxyl radical group N-O-,
- X3: is CR⁷R^{7a} or a nitroxyl radical group N-O-,
- X⁴: is CR⁸R^{8a} or a nitroxyl radical group N-O-,
- X⁵: is CR⁹R^{9a} or a nitroxyl radical group N-O-,
- R³,: R⁴, R⁵, R^{5a}, R⁶, R^{6a} R⁷, R^{7a}, R⁸, R^{8a}, R⁹, R^{9a} are independently from each other selected from H and an organic radical having from 1 to 40 carbon atoms,
or two adjacent radicals of the group of radicals consisting of R¹, R², R³, R⁴, R⁵, R^{5a}, R⁶, R^{6a} R⁷, R^{7a}, R⁸, R^{8a}, R⁹ and R^{9a} together with the atoms connecting them form a monocyclic or polycyclic, substituted or unsubstituted, aliphatic or aromatic ring system which has from 4 to 40 carbon atoms and can also comprise heteroatoms selected from the group consisting of the elements Si, Ge, N, P, O, S, Se and Te.

Preferred are compounds of general formula (I) wherein
- R¹, R²: are independently from each other and are selected from H, methyl, ethyl, n-butyl, t-butyl and phenyl, preferably H and methyl,
- X¹: is CR⁵R^{5a},
- X²: is CR⁶R^{6a},
- X³: is CR⁷R^{7a},
- X⁴: is CR⁸R^{8a},
- X⁵: is CR⁹R^{9a} or a nitroxyl radical group N-O-,
- R³,: R⁴, R⁵, R^{5a}, R⁶, R^{6a} R⁷, R^{7a}, R⁸, R^{8a}, R⁹, R^{9a} are each H.

In one embodiment of the present invention, the inventive rechargeable electrochemical cell is characterized in that the redox active compound (d3) is a compound of general formula (I) 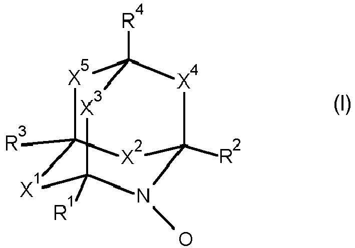 wherein
- R¹, R²: are independently from each other and are selected from H, methyl, ethyl, n-butyl, t-butyl and phenyl, preferably H and methyl,
- X¹: is CR⁵R^{5a},
- X²: is CR⁶R^{6a},
- X³: is CR⁷R^{7a},
- X⁴: is CR⁸R^{8a},
- X⁵: is CR⁹R^{9a} or a nitroxyl radical group N-O·,
- R³,: R⁴, R⁵, R^{5a}, R⁶, R^{6a} R⁷, R^{7a}, R⁸, R^{8a}, R⁹, R^{9a} are each H.

Particularly preferred examples of formula (I) are:

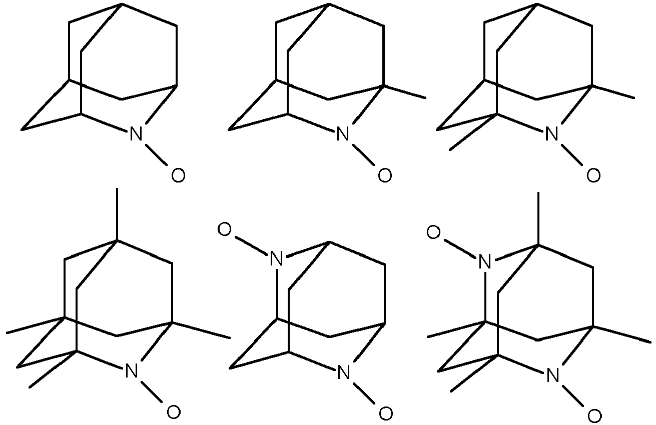

The inventive rechargeable electrochemical cell is further characterized in that any contact of composition (d) with anode (a) is prevented by hermetically sealing these components from each other. That means that separator assembly (c) is placed between anode (a) and gas diffusion electrode (b) in such a way that composition (d), which can also be described as catholyte, cannot reach anode (a). Depending on the shape and design of the electrochemical cell the person skilled in the art knows by which means hermetically sealing can be achieved.

Inventive rechargeable electrochemical cells further comprise a housing which may be of any shape, for example cuboidal or in the shape of a cylinder. In another embodiment, inventive rechargeable electrochemical cells have the shape of a prism. In one variant, the housing used is a metal-plastic composite film processed as a pouch.

The inventive rechargeable electrochemical cells can be assembled to rechargeable metal-air batteries, especially rechargeable lithium-air batteries.

Accordingly, the present invention also further provides for the use of inventive rechargeable electrochemical cells as described above in rechargeable metal-air batteries, especially rechargeable lithium-air batteries.

The present invention further provides a metal-air battery comprising at least one rechargeable electrochemical cell as described above. Inventive rechargeable electrochemical cells can be combined with one another in inventive metal-air batteries, for example in series connection or in parallel connection. Series connection is preferred.

Inventive rechargeable electrochemical cells are notable for particularly high capacities, high performances even after repeated charging and greatly retarded cell death. Inventive rechargeable electrochemical cells are very suitable for use in motor vehicles, bicycles operated by electric motor (e.g. pedelecs), aircraft, ships and boats or stationary energy storage. Such uses form a further part of the subject matter of the present invention.

The present invention further provides for the use of inventive rechargeable electrochemical cells as described above in motor vehicles, bicycles operated by electric motor, aircraft, ships and boats or stationary energy storage.

The use of inventive rechargeable electrochemical cells in devices gives the advantage of prolonged run time before recharging and a smaller loss of capacity in the course of prolonged run time. If the intention were to achieve an equal run time with electrochemical cells with lower energy density, a higher weight for electrochemical cells would have to be accepted.

The present invention therefore further provides for the use of inventive rechargeable electro-chemical cells in devices, especially in mobile devices. Examples of mobile devices are vehicles, for example automobiles, bicycles, aircraft, or water vehicles such as boats or ships. Other examples of mobile devices are those which are portable, for example computers, especially laptops, telephones or electrical power tools, for example from the construction sector, especial-ly drills, battery-driven screwdrivers or battery-driven tackers.

The present invention further provides a device comprising at least one rechargeable electro-chemical cell as described above.

Compositions (d) comprising at least one redox active compound of general formula (I) show an advantageous effect in rechargeable lithium-air cell even in the presence of a porous separator with respect to the reduction of the charging voltages leading to improved energy efficiencies. The low redox potential of the corresponding redox active compound makes compositions (d) a promising choice for catholytes in rechargeable lithium-air batteries.

The present invention therefore also further provides a composition (d) comprising
(d1) at least one aprotic organic solvent (d1),
(d2) at least one metal salt (d2), and
(d3) at least one redox active compound of general formula (I), 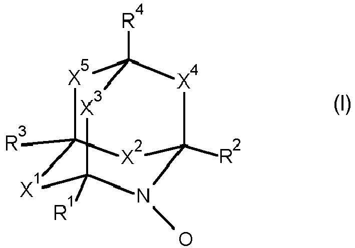 wherein
   - R¹, R²: are independently from each other selected from H and an organic radical having from 1 to 40 carbon atoms,
   - X¹: is CR⁵R^{5a} or a nitroxyl radical group N-O·,
   - X2: is CR⁶R^{6a} or a nitroxyl radical group N-O·,
   - X3: is CR⁷R^{7a} or a nitroxyl radical group N-O·,
   - X⁴: is CR⁸R^{8a} or a nitroxyl radical group N-O·,
   - X⁵: is CR⁹R^{9a} or a nitroxyl radical group N-O·,
   - R³,: R⁴, R⁵, R^{5a}, R⁶, R^{6a} R7, R^{7a}, R⁸, R^{8a}, R⁹, R^{9a} are independently from each other selected from H and an organic radical having from 1 to 40 carbon atoms,
or two adjacent radicals of the group of radicals consisting of R¹, R², R³, R⁴, R⁵, R^{5a}, R⁶, R^{6a} R¹, R^{7a}, R⁸, R^{8a}, R⁹ and R^{9a} together with the atoms connecting them form a monocy-clic or polycyclic, substituted or unsubstituted, aliphatic or aromatic ring system which has from 4 to 40 carbon atoms and can also comprise heteroatoms selected from the group consisting of the elements Si, Ge, N, P, O, S, Se and Te.

Preferred embodiments with regard to composition (d) and the constituents present therein, namely the aprotic organic solvent (d1), the metal salt (d2), and the redox active compound of general formula (I) are identical to those described above in connection with the inventive electrochemical cell.

In one embodiment of the present invention, the inventive composition (d) is characterized in that the variables in formula (I) are defined as follows:
- R¹, R²: are independently from each other and are selected from H, methyl, ethyl, n-butyl, t-butyl and phenyl, preferably H and methyl,
- X¹: is CR⁵R^{5a},
- X²: is CR⁶R^{6a},
- X³: is CR⁷R^{7a},
- X⁴: is CR⁸R^{8a},
- X⁵: is CR⁹R^{9a} or a nitroxyl radical group N-O·,
- R³,: R⁴, R⁵, R^{5a}, R⁶, R^{6a} R⁷, R^{7a}, R⁸, R^{8a}, R⁹, R^{9a} are each H.

In one embodiment of the present invention, the inventive composition (d) is characterized in that the concentration of the redox active compound of formula (I) in the inventive composition (d) is in the range from 0.1 to 5000 mmol/l, preferably in the range from 0.2 to 2000 mmol/l, more preferably in the range from 0.5 to 1500 mmol/l, in particular in the range from 1 to 1200 mmol/l.

If more than one redox active compound (d3) is present in the inventive composition (d) the sum of the concentrations of all redox active compounds (d3) in composition (d) is in the range from 0.1 to 5000 mmol/l, preferably in the range from 0.2 to 2000 mmol/l, more preferably in the range from 0.5 to 1500 mmol/l, in particular in the range from 1 to 1200 mmol/l.

In one embodiment of the present invention, the inventive composition (d) is further characterized in that the aprotic organic solvent (d1) is selected from polymers, cyclic or noncyclic ethers, noncyclic or cyclic acetals, cyclic or noncyclic organic carbonates and ionic liquids and wherein the alkali metal salt (d2) is a lithium salt.

The inventive composition (d) can be used in metal-air cells, in particular in lithium-air cells, comprising either a porous separator or a non-porous lithium-ion selective separator membrane. In a cell with a porous separator the redox active compounds (d3) is used in low concentrations since it is used only as a catalyst for oxygen reduction or oxygen evolution. In a cell with a non-porous lithium-ion selective separator assembly the redox active compounds (d3) can be used in high concentrations since it serves in oxidized form as an additional source of directly available oxidant on the cathode during discharging the cell.

The present invention further provides a rechargeable electrochemical cell comprising
(a) at least one anode (a),
(b) at least one gas diffusion electrode (b) comprising at least one porous support, and
(d) at least an inventive composition (d) as described above.

Preferred embodiments with regard to said inventive rechargeable electrochemical cell and the constituents present therein, namely the anode (a) and the gas diffusion electrode (b) are identical to those described above in connection with the previously described inventive electrochemical cell wherein any contact of composition (d) with anode (a) is prevented by hermetically sealing these components from each other.

In one embodiment of the present invention the rechargeable electrochemical cell, which comprises inventive composition (d), is characterized in that anode (a) comprises a metal selected from the group consisting of alkali metals, alkaline earth metals, Al, Si and Zn, preferably selected from the group consisting of Li, Na and Zn, in particular Li.

The invention is illustrated by the examples which follow, which do not, however, restrict the invention.

Figures in % are each based on % by weight, unless explicitly stated otherwise.

Experimental and results:

I General description of the different cell compartments

### Anode (Ia)

The anode was composed of elemental lithium (10 mm diameter, purchased from Rockwood Lithium), which was pretreated with 0.1 mol/l LiTFSI/propylene carbonate and subsequently washed with diglyme.

### Gas diffusion electrode (Ib)

The gas diffusion electrodes were prepared as follows: A slurry containing 23 mg of a PTFE dispersion (60 wt% in water, manufactured by Sigma Aldrich) and 96 mg Ketjen Black (manufactured by AkzoNobel) in 15 ml 2-Propanol was casted on disc shaped glass fiber separators (10 mm diameter, Whatman) and subsequently dried at 160°C in vacuum. The final carbon loading of each sample was exactly 0.45 mg/cm².

Non-porous lithium-ion conducting separator assembly (Ic)

The laterally sealed non-porous lithium-ion conducting separator assembly (LCSA) was manufactured as follows: 12 mm discs of a Li_{1+x+y}AlₓTi₂₋ₓSi_{y}P_{3-y}O₁₂ based lithium-ion-conducting glass ceramic (type LICGC-AG01 manufactured by Ohara Corporation, thickness: 150 µm) were laterally sealed with a polyethylene (PE) ring to finally provide an accessible surface area of 79 mm² diameter.

### Chemicals (Id)

LiTFSI (Bis(trifluoromethane)sulfonimide lithium, 99,95% purity), diglyme (diethylene glycol dimethyl ether, 99,5% purity), TEMPO (2,2,6,6-tetramethyl-1-piperidinyloxy, 99% purity), 4-Methoxy-TEMPO (4-Methoxy-2,2,6,6-tetramethyl-1-piperidinyloxy, 99% purity), 1-Me-AZADO (1-Methyl-2-azaadamantane-*N*-oxyl, 97% purity) were purchased from Sigma Aldrich. Diglyme was subsequently purified by distillation and LiTFSI was dried at 160 °C in vacuum. TEMPO and 4-Methoxy-TEMPO were purified by sublimation prior to use.

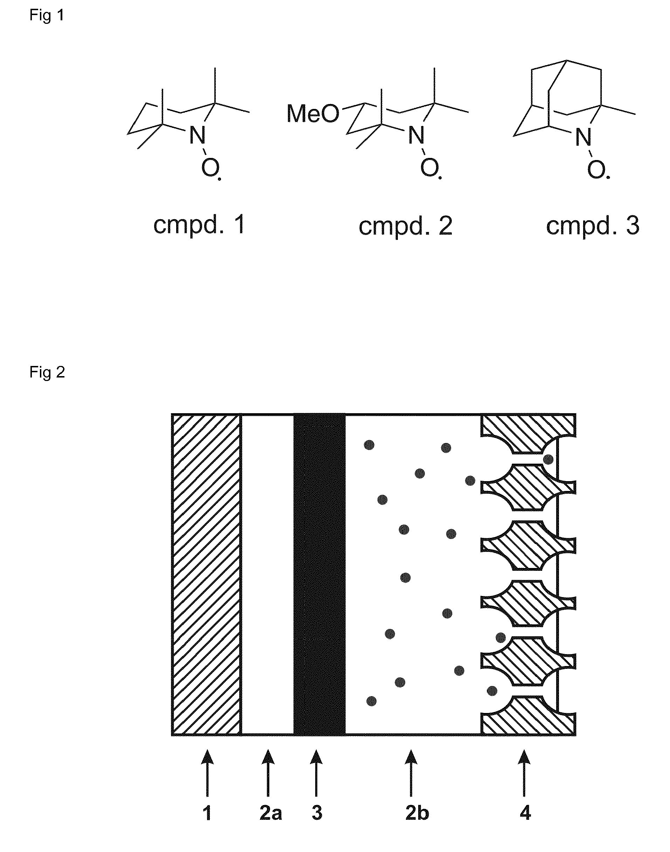

Fig 1 illustrates the chemical structures of the nitroxides TEMPO (cmpd 1), 4-Methoxy-TEMPO (cmpd. 2) and 1-Me-AZADO (cmpd. 3).

### Cycling (Ie)

The galvanostatic cycling was performed using a Maccor battery cycler. All current densities were related to the geometric surface area of the cathodes.

II Electrochemical cycling of hybrid lithium-air cells with high redox mediator concentrations

The lithium-air cells with a LCSA were assembled as follows: a disc-shaped glass fiber separator (10 mm diameter, manufactured by Whatman) soaked with 30 µl of 1 mol/l LiTFSI/diglyme (referred to as anolyte) was placed on the anodic site of the LCSA. Subsequently, the lithium anode (Ia) and a stainless steel current collector were stacked on top of the separator. The cathodic site of the test cell consisted of one pure layer of separator and one additional layer with the casted gas diffusion electrode on top (Ib). Subsequently a defined volume of a liquid catholyte was added, which comprised of 1 mol/l LiTFSI/digylme and TEMPO in concentrations from 0 mM to 200 mM. The electrochemical cells were placed in a gastight Swaglok^{®} tube fitting with a closed gas vessel, which was filled with pure oxygen. Additionally, reference experiments were conducted without a LCSA using an otherwise identical setup.

Fig 2 shows a schematic illustration of the lithium-air cells with LCSA consisting of a lithium anode (1), a glass fiber separator soaked with the anolyte (2a), a laterally sealed LCSA based on LICGC-AG01 (3), two layers of the glass fiber separator soaked with the catholyte (2b) and the gas diffusion electrode (4).

The cells were galvanostatically cycled using a current density of 0.05 mA/cm^{2.} Thereby, a capacity of 1000 mAh/gc was set as limit for the discharge at a voltages U below 3.0 V, which is associated with the oxygen reduction reaction. The discharge step at voltages U higher than 3.0 V was not limited by time or relative capacity. This discharge step represents the reduction of the oxidized form of the redox active compounds.

Table 1 summarizes the parameters of the different cycling experiments (expl 1- expl. 8) including the TEMPO concentration *c*₀ of the catholyte, the volume Vof the catholyte and the cell setup. While the second discharge directly started after the first charge in exp. 1 - 3 and 6 - 8, an additional step of open circuit voltage (OCV) was included between both steps in exp. 4 and 5. The term *Q*_{O} describes the overcharge capacity of the first charge, which was calculated as the difference between the capacity of the first charge and the fixed capacity of the first discharge (1000 mAh/gc). *Q*_{O} is associated with the oxidation of TEMPO in the bulk electrolyte after completing the oxygen evolution reaction. The term *Q*_{T} describes the capacity associated with the reduction of TEMPO⁺ in the bulk electrolyte during the second discharge. *Q*_{T} corresponds to the discharge capacity at cell voltages higher or equal 3.0 V, since the oxygen reduction reaction starts at voltages lower than 3.0 V. The yield *Q*_{T}/*Q*_{T0} describes the ratio between the TEMPO⁺ reduction plateau in the second cycle *Q*_{T} and its theoretically expected valued *Q*_{T0}. *Q*_{T0} is calculated on the basis of the TEMPO concentration and the volume of the catholyte. The yield *Q*_{T}/*Q*_{O} describes the ratio between the TEMPO⁺ reduction plateau in the second cycle *Q*_{T} and the overcharge capacity of the first cycle *Q*₀. Herein, consistent cell weights were maintained, since the catholyte with 200 mmol/l TEMPO exhibit the same density (1.11 g/ml) like the catholyte with 100 mmol/l TEMPO (1.11 g/ml) and the catholyte without TEMPO (1.11 g/ml).

**Table 1**

| Expl. | LCSA | *c*₀/ mM | *V*/µl | OCV after 1^{st} cycle | capacity *Q*_{O} / C | capacity *Q*_{T}/C | yield *Q*_{T}/*Q*_{T0} / % | yield Q_{T}/Q_{O} / % |
|---|---|---|---|---|---|---|---|---|
| 1 | No | 0 | 35 | No | - | - | - | - |
| 2 | No | 100 | 35 | No | 0.35 | 0.23 | 68 | 66 |
| 3 | yes | 100 | 35 | No | 0.31 | 0.27 | 81 | 89 |
| 4 | No | 100 | 35 | 15 h | 0.37 | 0.11 | 33 | 30 |
| 5 | Yes | 100 | 35 | 15 h | 0.31 | 0.27 | 80 | 87 |
| 6 | Yes | 20 | 35 | No | 0.06 | 0.07 | 101 | 106 |
| 7 | Yes | 100 | 46 | No | 0.39 | 0.39 | 87 | 98 |
| 8 | Yes | 200 | 35 | No | 0.62 | 0.59 | 88 | 95 |

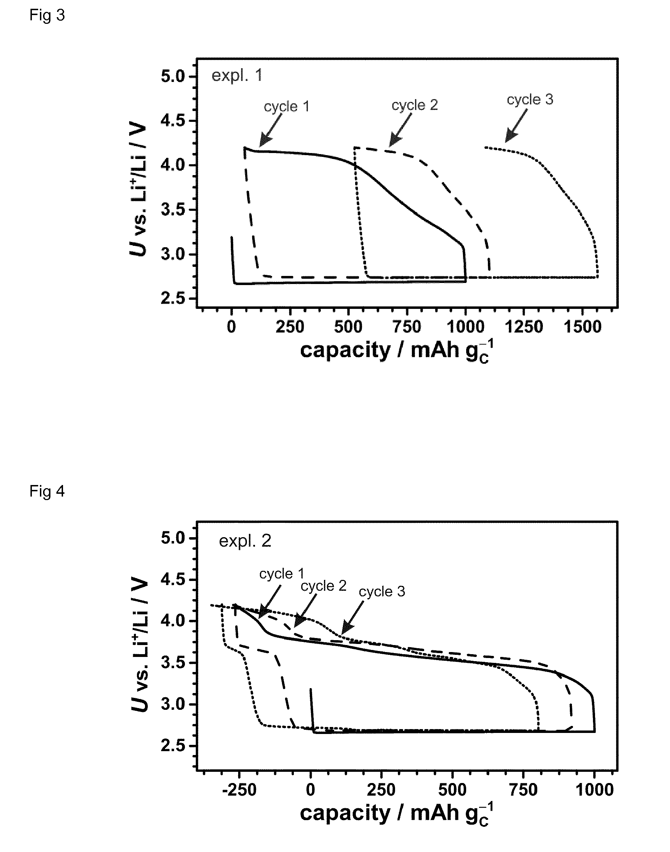

Fig 3 shows the first three cycles of a lithium-air cell using a cell setup without a LCSA and a catholyte without TEMPO (expl. 1). In the absence of the redox active compound high charging voltages with U > 4.0 V appeared. The second discharge provided a capapity of -1040 mAh/g_{C}, which was close to the fixed ORR capacity of 1000 mAh/gc. The slight deviation is probably caused by capacitive contributions at voltages above 3.0 V.

Fig 4 shows the first three cycles of a lithium-air cell using a cell setup without a LCSA and a catholyte with 100 mmol/l TEMPO (expl. 2). The dissolved redox active compound lead to a distinct reduction of charging overvoltages compared to expl. 1 (see also J. Am. Chem. Soc. 2014, 136, 15054-15064). The second and the third discharge steps showed an additional plateau at -3.7 V according to the reduction of TEMPO⁺. However, this plateau solely corresponded to a *Q*_{T}/*Q*_{T0} ratio of 68% and a *Q*_{T}/*Q*_{O} ratio of 66% indicating a loss of coulombic efficiency by a direct reduction of TEMPO⁺ at the anode surface. The total capacity of the second discharge increased to ∼1180 mAh/gc compared to -1040 mAh/gc in expl. 1.

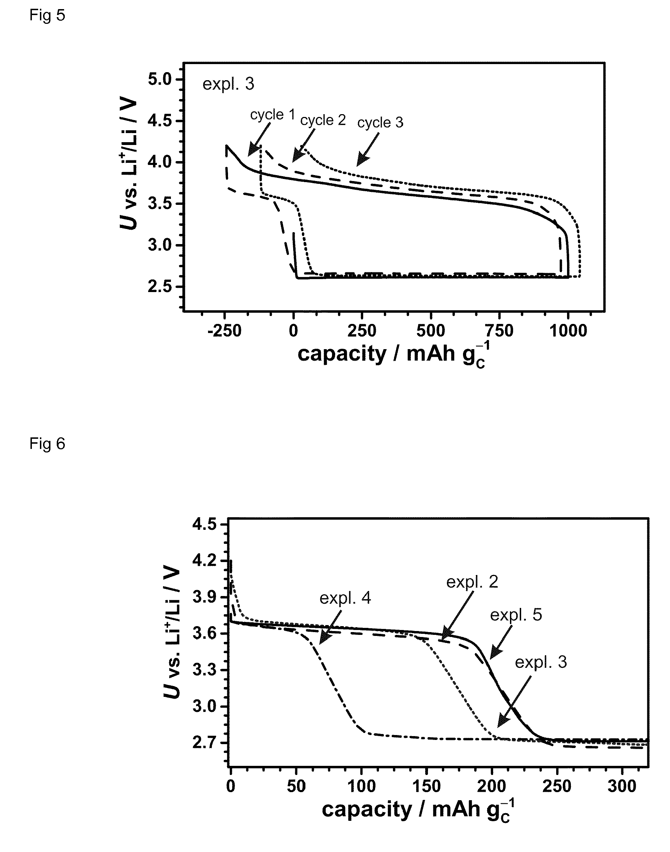

Fig 5 shows the first three cycles of a lithium-air cell using a cell setup with a LCSA and a catholyte with 100 mmol/l TEMPO (expl. 3). The second and the third discharge steps showed an additional plateau at -3.7 V according to the reduction of TEMPO⁺. The plateau corresponds to a *Q*_{T}/*Q*_{T0} ratio of 81 % and a *Q*_{T}/*Q*_{O} ratio of 89%. Expl. 3 showed a significant increase of the ratios *Q*_{T}/*Q*_{T0} and *Q*_{T}/*Q*_{O} compared to expl. 2, since the TEMPO⁺ diffusion to the anode surface is blocked by the LCSA. The total capacity of the second discharge further increased to -1220 mAh/gc compared to -1040 mAh/gc in expl. 1 and -1180 mAh/gc in expl. 2.

Fig 6 shows the second discharge of lithium-air cells using a catholyte with 100 mmol/l TEMPO and a cell setup either with a LCSA (exp. 3 and expl.5) or without a LCSA (exp. 2 and expl.4). While the second discharge directly started after the first charge in exp. 1 - 3 and 6 - 8, an additional step of open circuit voltage (OCV) was included between both steps in exp. 4 and 5. The cell setup without a LCSA showed a strong decrease of the TEMPO⁺ reduction plateau after 15 h of OCV, while no difference was observed in the cell with a LCSA. Hence, a prolonged storage of energy was only provided by using a LCSA.

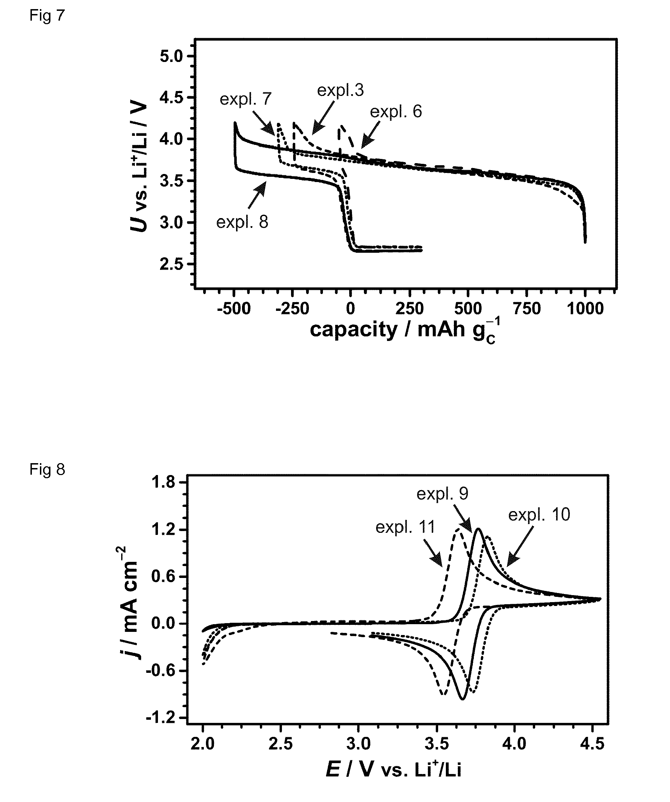

Fig 7 shows the second discharge of lithium-air cells using a cell setup with a LCSA and either 35 µl of a catholyte with 20 mmol/l TEMPO (expl. 6), 35 µl of a catholyte with 100 mmol/l TEMPO (expl. 2), 46 µl of a catholyte with 100 mmol/l TEMPO (expl 7) or 35 µl of a catholyte with 200 mmol/l TEMPO (expl 8). **Error! Reference source not found.**Fig**.** 7 clearly indicates that the amount of additionally storable energy directly corresponded to the volume of the catholyte and the concentration of the redox active compound.

### III Electrochemical investigation of electrolytes comprising different nitroxides

### Nitroxide containing electrolytes (IIIa)

The investigated electrolytes comprised of 1 mol/l LiTFSI/diglyme, which additionally contained either 10 mmol/l TEMPO (cmpd. 1), 10 mmol/l 4-Methoxy-TEMPO (cmpd. 2) or 10 mmol/l 1-Me-AZADO (cmpd. 3).

### III.1 Cyclic Voltammetry

Different nitroxides were investigated by cyclic voltammetry (CV) using a glassy carbon working electrode (6 mm diameter), a platinum wire as counter electrode, a lithium reference electrode (lithium purchased from Rockwood Lithium) and 4 ml of the abovementioned electrolytes (IIIa). Cyclic voltammograms were recorded with a scan speed of 50 mV/s under argon atmosphere. Fig 8 shows the cyclic voltamogramms of TEMPO (expl. 9), 4-Methoxy-TEMPO (expl. 10) and 1-Me-AZADO (expl. 11). 1-Me-AZADO exemplarily represents redox active compounds of formula (I). The redox potentials, calculated as the mean value of the cathodic and anodic peak potentials, are summarized in table 2. Herein, 1-Me-AZADO exhibited distinctly lower redox potentials than the TEMPO related nitroxides TEMPO and 4-Methoxy-TEMPO.

**Table 2**

| Cmpd. | Name | E₀ vs. Li⁺/Li / V |
|---|---|---|
| 1 | TEMPO | 3.73 |
| 2 | 4-Methoxy-TEMPO | 3.76 |
| 3 | 1-Me-AZADO | 3.60 |

### III.2 Electrochemical cycling of lithium-air cells comprising different dissolved nitroxides

The galvanostatic cycling was performed in Swagelok^{©}-type cells with a closed gas vessel containing a lithium anode (Ia), a lithium reference electrode (purchased from Rockwood Lithium) and a gas diffusion electrode according to (Id). In contrast to (Id), final carbon loading in the range from 0.40 to 0.76 mg/cm² was adjusted. A disc shaped glass fiber separator was placed between gas diffusion electrode and anode (12 mm diameter, manufactured by Whatman), which was soaked with 60 µl of the abovementioned electrolytes (IIIa). The cells were purged with oxygen and subsequently cycled using a current density of 0.1 mA/cm² and a fixed discharge capacity of 1000 mAh/gc.

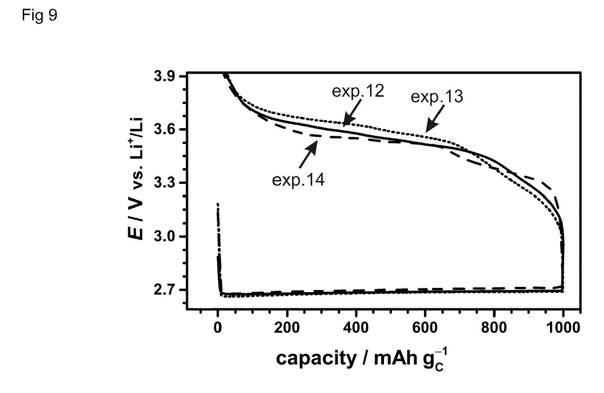

Fig 9 shows the first cycle of lithium-air cells containing TEMPO (expl. 12), 4-Methoxy-TEMPO (expl. 13) and 1-Me-AZADO (expl. 14), compare (IIIa). Lithium-air cells with 1-Me-AZADO showed lower charging voltage and a higher energy efficiency than lithium-air cells with TEMPO or 4-Methoxy-TEMPO. Redox active compounds of formula (I), exemplarily represented by 1-Me-AZADO, are therefore promising candidates for the use in rechargeable metal air batteries, in particular lithium-air batteries.

## Claims

1. A rechargeable electrochemical cell comprising
(a) at least one anode (a),
(b) at least one gas diffusion electrode (b) comprising at least one porous support,
(c) at least one non-porous metal-ion conducting separator assembly (c) placed between anode (a) and gas diffusion electrode (b), and
(d) at least one composition (d) being in contact with the gas diffusion electrode (b), wherein the composition (d) comprises
(d1) at least one aprotic organic solvent (d1),
(d2) at least one metal salt (d2), and
(d3) at least one redox active compound (d3), wherein the concentration of the redox active compound (d3) in the composition (d) is in the range from 100 to 5000 mmol/l,
wherein any contact of composition (d) with anode (a) is prevented by hermetically sealing these components from each other.

2. The rechargeable electrochemical cell according to claim 1, wherein the anode (a) comprises a metal selected from the group consisting of alkali metals, alkaline earth metals, Al, Si and Zn.

3. The rechargeable electrochemical cell according to claim 1 or 2, wherein the non-porous metal-ion conducting separator assembly (c) comprises an alkali-ion conducting material selected from the group consisting of ion conducting polymers, polymer gels, polymer composites, ceramics, sintered ceramics, glass-ceramics and glasses.

4. The rechargeable electrochemical cell according to any of claims 1 to 3, wherein the aprotic organic solvent (d1) is selected from polymers, cyclic or noncyclic ethers, noncyclic or cyclic acetals, cyclic or noncyclic organic carbonates and ionic liquids.

5. The rechargeable electrochemical cell according to any of claims 1 to 4, wherein the metal salt (d2) is a lithium salt.

6. The rechargeable electrochemical cell according to any of claims 1 to 5, wherein the redox active compound (d3) is selected from the group consisting of organic heterocyclic compounds comprising at least one nitrogen atom in a ring of said organic heterocyclic compounds wherein the nitrogen atom of the ring is part of a nitroxyl radical group N-O-.

7. The rechargeable electrochemical cell according to any of claims 1 to 6, wherein the redox active compound (d3) is a compound of general formula (I), 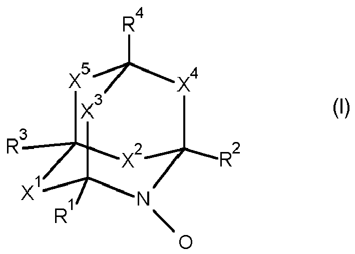 wherein
R¹, R² are independently from each other selected from H and an organic radical having from 1 to 40 carbon atoms,
X¹ is CR⁵R^{5a} or a nitroxyl radical group N-O·,
X2 is CR⁶R^{6a} or a nitroxyl radical group N-O·,
X3 is CR⁷R^{7a} or a nitroxyl radical group N-O·,
X⁴ is CR⁸R^{8a} or a nitroxyl radical group N-O·,
X5 is CR⁹R^{9a} or a nitroxyl radical group N-O·,
R³, R⁴, R⁵, R^{5a}, R⁶, R^{6a} R⁷, R^{7a}, R⁸, R^{8a}, R⁹, R^{9a} are independently from each other selected from H and an organic radical having from 1 to 40 carbon atoms,
or two adjacent radicals of the group of radicals consisting of R¹, R², R³, R⁴, R⁵, R^{5a}, R⁶, R^{6a} R⁷, R^{7a}, R⁹, R^{8a}, R⁹ and R^{9a} together with the atoms connecting them form a monocyclic or polycyclic, substituted or unsubstituted, aliphatic or aromatic ring system which has from 4 to 40 carbon atoms and can also comprise heteroatoms selected from the group consisting of the elements Si, Ge, N, P, O, S, Se and Te.

8. The rechargeable electrochemical cell according to claim 7, wherein
R¹, R² are independently from each other and are selected from H, methyl, ethyl, n-butyl, t-butyl and phenyl
X¹ is CR⁵R^{5a},
X² is CR⁶R^{6a},
X³ is CR⁷R^{7a},
X⁴ is CR⁸R^{8a},
X⁵ is CR⁹R^{9a} or a nitroxyl radical group N-O·,
R³, R⁴, R⁵, R^{5a}, R⁶, R^{6a} R⁷, R^{7a}, R⁹, R^{8a}, R⁹, R^{9a} are each H.

9. A device comprising at least one rechargeable electrochemical cell according to any of claims 1 to 8.

10. A composition (d) comprising
(d1) at least one aprotic organic solvent (d1),
(d2) at least one metal salt (d2), and
(d3) at least one redox active compound of general formula (I), 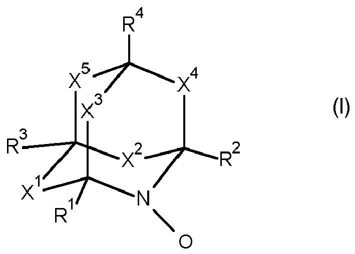 wherein
R¹, R² are independently from each other selected from H and an organic radical having from 1 to 40 carbon atoms,
X¹ is CR⁵R^{5a} or a nitroxyl radical group N-O·,
X² is CR⁶R^{6a} or a nitroxyl radical group N-O·,
X3 is CR⁷R^{7a} or a nitroxyl radical group N-O·,
X⁴ is CR⁸R^{8a} or a nitroxyl radical group N-O·,
X5 is CR⁹R^{9a} or a nitroxyl radical group N-O·,
R³, R⁴, R⁵, R^{5a}, R⁶, R^{6a} R⁷, R^{7a}, R⁸, R^{8a}, R⁹, R^{9a} are independently from each other selected from H and an organic radical having from 1 to 40 carbon atoms,
or two adjacent radicals of the group of radicals consisting of R¹, R², R³, R⁴, R⁵, R^{5a}, R⁶, R^{6a} R⁷, R^{7a}, R⁸, R^{8a}, R⁹ and R^{9a} together with the atoms connecting them form a monocyclic or polycyclic, substituted or unsubstituted, aliphatic or aromatic ring system which has from 4 to 40 carbon atoms and can also comprise heteroatoms selected from the group consisting of the elements Si, Ge, N, P, O, S, Se and Te.

11. The composition (d) according to claim 10, wherein
R¹, R² are independently from each other and are selected from H, methyl, ethyl, n-butyl, t-butyl and phenyl,
X¹ is CR⁵R^{5a},
X² is CR⁶R^{6a},
X³ is CR⁷R^{7a},
X⁴ is CR⁸R^{8a},
X⁵ is CR⁹R^{9a} or a nitroxyl radical group N-O·,
R³, R⁴, R⁵, R^{5a}, R⁶, R^{6a} R⁷, R^{7a}, R⁸, R^{8a}, R⁹, R^{9a} are each H.

12. The composition (d) according to claim 10 or 11, wherein
the concentration of the redox active compound in composition (d) is in the range from 0.1 to 5000 mmol/l.

13. The composition (d) according to any of claims 10 to 12, wherein the aprotic organic solvent (d1) is selected from polymers, cyclic or noncyclic ethers, noncyclic or cyclic acetals, cyclic or noncyclic organic carbonates and ionic liquids and wherein the metal salt (d2) is a lithium salt.

14. A rechargeable electrochemical cell comprising
(a) at least one anode (a),
(b) at least one gas diffusion electrode (b) comprising at least one porous support, and
(d) at least a composition (d) according to any of claims 10 to 13.

15. The rechargeable electrochemical cell according to claim 14, wherein the anode (a) comprises a metal selected from the group consisting of alkali metals, alkaline earth metals, Al, Si and Zn.
